# EUROPEAN PATENT SPECIFICATION

(11) **EP 3 403 334 B1**
(45) Date of publication and mention of the grant of the patent: **04.12.2019**
(21) Application number: 17701178.0
(22) Date of filing: 11.01.2017
(51) Int. Cl.: H04B 7/02, H04B 1/00

(54) **TOWER MOUNTED AMPLIFIER AND METHOD OF USE THEREOF**
TURMARTIG MONTIERTER VERSTÄRKER UND VERFAHREN ZUR VERWENDUNG DAVON
AMPLIFICATEUR MONTÉ SUR PYLÔNE ET SON PROCÉDÉ D'UTILISATION

(30) Priority: 11.01.2016 GB 201600433
(43) Date of publication of application: 21.11.2018
(73) Proprietor: Radio Design Limited, West Yorkshire BD17 7DW (GB)
(72) Inventor: GOSTLING, Martin, Shipley West Yorkshire BD17 7DW (GB)
(74) Representative: Tomkinson, Alexandra
(86) International application number: PCT/GB2017/050052
(87) International publication number: WO 2017/122001

(56) References cited:
- EP-A1- 2 660 975
- GB-A- 2 501 363

## Description

This invention relates to radio frequency apparatus and to a method of use thereof.

Although the following description refers almost exclusively to radio frequency apparatus in the form of a tower mounted amplifier (hereinafter referred to as a TMA), it will be appreciated by persons skilled in the art that the apparatus could be in the form of any radio frequency apparatus including amplification means or having active amplification, a radio frequency router and/or the like.

A wireless communication network typically includes a plurality of cell sites which allow radio frequency signals to be transmitted to and received from mobile phone units. Each cell site typically includes a mast, at the top of which is typically mounted an antenna for transmitting and/or receiving one or more radio frequency signals and optionally a tower mounted amplifier (TMA) for amplifying the radio frequency signals. A base transceiver station (BTS) is typically located at the base of the mast and is connected via a feeder cable to the TMA. The BTS typically includes a transceiver that generates one or more radio frequency signals for transmission to a mobile phone unit, as well as receiving one or more radio frequency signals from the mobile phone unit.

There is a requirement for modern commercial wireless communication networks to provide high data rate connections to end users to support services such as video calling, internet browsing and multimedia downloading. The wireless connection between a cell site and a mobile phone unit is often the part of the network under most strain.

Historically, the wireless connections between a cell site and a mobile phone unit have been made using two or three frequency bands per region. For example, in the UK these frequency bands are at 900MHz, 1800MHz and 2100MHz. Each frequency band has also conventionally been assigned to a particular technology; the 900MHz and 1800MHz bands have typically been licensed for second generation (2G) system use only, and the 2100MHz band has been licensed for third generation (3G) system use. As 3G systems support higher data rates than 2G systems, the licenses for frequency bands previously restricted to 2G systems only have now been amended to allow 3G systems and potentially fourth generation (4G) systems to be deployed within them. In addition, further bandwidth is being made available via freeing up additional frequency bands. For example, spectrum freed up by the move from analogue to digital television has created an available frequency band within Europe at 800MHz. Mobile communication operators therefore need to invest significant amounts of money in their networks to provide the latest technologies in multiple bands whilst continuing to support legacy technology/band combinations. Consequently, mobile communication operators are under pressure to reduce capital expenditure (CAPEX) and operating expenditure (OPEX) wherever possible in their wireless communication networks.

A significant opportunity for cost saving for a mobile communication operator is sharing of network infrastructure. A single operator can share infrastructure between equipment operating in different bands.

Typically, a BTS at a cell site is needed for each frequency band, each operator and each technology. A common cell site configuration comprises splitting the area to be covered by the wireless communications network into three 120 degree sectors, with each sector serviced by an antenna configuration that provides a pair of statistically independent reception and/or transmission paths to the mobile phone units. There are several methods for producing such an antenna configuration including spatial diversity and X-polarised antennas. The feeder cables, TMAs and antennae are often referred to as an antenna system. In all cases the antenna systems will have a pair of ports, each port associated with one of the statistically independent paths. Within each sector the cell site may transmit on one or both antenna ports but it will receive on both. The use of two statistically independent paths for receiving a signal is referred to as receive diversity and improves the sensitivity of the BTS receiver. Receiver sensitivity directly impacts the cell site coverage and capacity. The impact that each component of the cell site has on receiver sensitivity can be understood by knowing how they impact the signal to noise ratio (SNR) of the received signal. The factor that the component decreases the SNR by is known as the noise figure (NF) of the component. The larger the NF of the component the more it degrades receiver sensitivity. The cables that connect the antenna to the transceiver decrease the SNR and operators seek to minimise this performance degradation by inserting a TMA at the top of the mast. The TMA contains a low noise amplifier (LNA) that is characterised by amplifying the desired signal whilst maintaining a low NF.

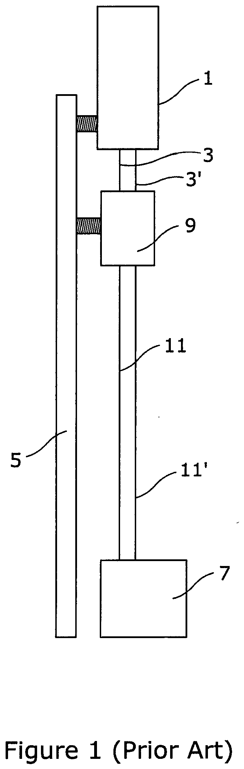

An example of a conventional cell site arrangement for a wireless communication network is illustrated with reference to figure 1. The cell site arrangement shown in figure 1 incorporates a single antenna 1 and a single base transceiver station (BTS) 7 and operates at a single radio frequency band. The antenna 1 is mounted at the top of a mast 5 and has two ports, each of which is connected via cables 3, 3' to a tower mounted amplifier (TMA) 9 also located at the top of mast 5. The transceiver or BTS 7 is located at the base of the mast 5 and includes a first transmitter and receiver, and a second transmitter and receiver (not shown). The first transmitter and receiver are connected via cable 11 to the TMA 9. The second transmitter and receiver are connected to the TMA 9 via cable 11'. A disadvantage of this cell site arrangement is that the site only caters for a single radio frequency band and does not allow a single operator to operate over two or more frequency bands, or two different operators to share the site and operate over two or more frequency bands.

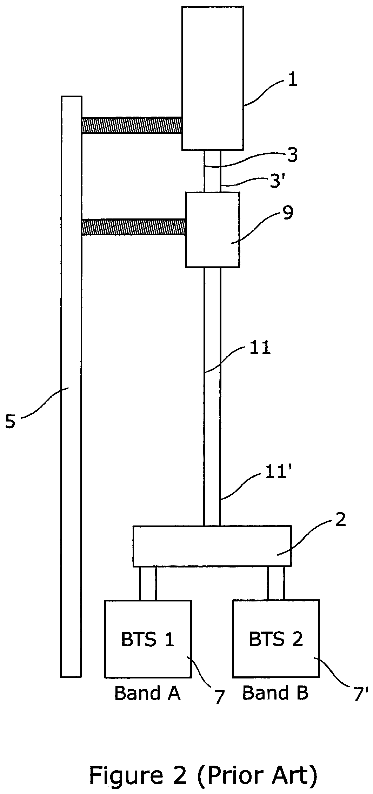

An example of a further conventional cell site arrangement for a wireless communication network is illustrated with reference to figure 2. The cell site arrangement shown in figure 2 allows a pair of BTSs operating in different radio frequency bands; Band A and Band B (i.e. 1800 MHz and 2100 MHz) to share a mast and antenna system, thereby reducing OPEX and CAPEX for the operator. As with the first illustrated prior art example, the cell site arrangement incorporates a single antenna 1 but includes two base transceiver stations (BTS) 7, 7'. BTS 7 operates in frequency Band A and BTS 7' operates in frequency Band B. The antenna 1 is mounted at the top of a mast 5 and has two ports, each of which is connected via cables 3, 3' to tower mounted amplifier (TMA) 9 also located at the top of mast 5. The transceivers or BTSs 7, 7' are located at the base of the mast 5 and each include a first transmitter, a first receiver, a second transmitter and a second receiver (not shown). A combiner 2 is provided between the BTSs 7, 7' and the TMA 9, typically at the base of the mast, to combine the radio frequency signals associated with the first and second transmitters and receivers onto cables 11, 11'. Since the combiner 2 is located at the base of the mast and the TMA 9 and the antenna 1 are located at the top of the mast, the co-axial cables 11, 11' used to connect the TMA 9 with the combiner 2 are relatively long. It is found that the longer the co-axial cable used in such cell site arrangements, the more transmission power that is dissipated in the cable and the weaker the receive signal received by the BTS.

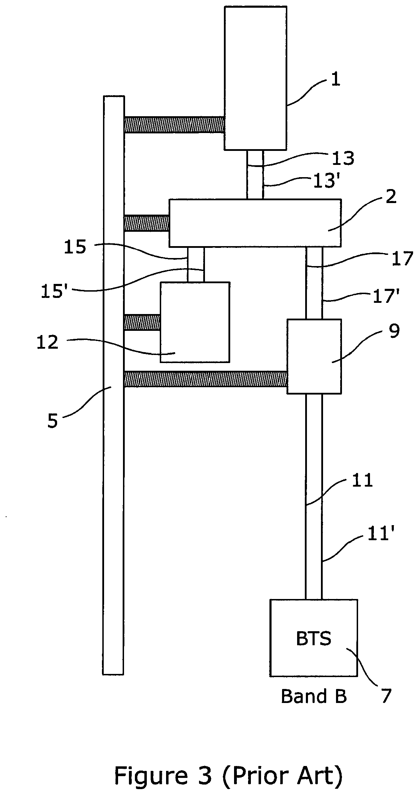

In an attempt to reduce the length of co-axial cables used in cell site arrangements, it is known to locate some of the transmit/receive equipment at the top of the mast in the form of a remote radio head (RRH). A further example of a conventional cell site arrangement for a wireless communication network incorporating a RRH is illustrated with reference to figure 3. A remote radio head (RRH) 12 is located at the top of mast 5 which operates in radio frequency Band A, and a BTS 7 located at a base of the mast is provided which operates in radio frequency Band B. The RRH and BTS share a mast and antenna system, thereby reducing OPEX and CAPEX for the operator. The cell site arrangement incorporates a single antenna 1 mounted at the top of mast 5. A combiner 2 is located between the antenna 1 and the RRH 12 and BTS 7 at the top of mast 5 to combine the radio frequency signals associated with the transmitters and receivers of the RRH 12 and BTS 7. A tower mounted amplifier (TMA) 9 is also located at the top of mast 5 and is connected between BTS 7 and combiner 2. Coaxial cables 13, 13' are provided between the antenna 1 and the combiner 2; coaxial cables 15, 15' are provided between the combiner 2 and the RRH 12; coaxial cables 17, 17' are provided between the combiner 2 and the TMA 9; and coaxial cables are provided between the TMA 9 and the BTS 7.

The cell site arrangement in Figure 3 has advantages over the cell site arrangements in Figures 1 and 2 in that by providing the RRH at the top of the mast, transmission and receiving of radio frequency signals is more efficient and the use of shorter coaxial cables between the RRH and the combiner/antenna typically result in smaller insertion losses. However, disadvantages of the cell site arrangement in Figure 3 are that there are two additional units located at the top of the mast (i.e. the combiner and the RRH). It is often difficult to find the space for locating two separate units at the top of the mast where space is limited. It is difficult to rig the mast with the units due to the complexity of the units at the top of the mast, and this ultimately increases the time, likelihood of human error, and cost of setting up the cell site. In addition, since there is greater interconnectivity at the top of the mast (i.e. more connections into more units), this increases the likelihood of having passive inter-modulation (PIM) problems.

EP2660975 discloses a tower mounted amplifier including first and second receive sections for receiving one or more radio frequency signals at first and second receive frequency bands, and first and second transmission sections for transmitting one or more radio frequency signals at the first and second frequency bands. A single antenna port is provided and a single transceiver port is provided for the respective pathways. A single amplification device is shared between the first and second receive sections.

GB2501363 discloses a tower mounted amplifier having a single receive pathway for receiving one or more radio frequency signals at a first frequency band, and a transmit/receive pathway for transmitting one or more radio frequency signals at the first frequency band and for transmitting and receiving radio frequency signals at a second frequency band. These pathways are provided between a single antenna port and a single transceiver port. Amplification means are provided in the first receive pathway.

It is therefore an aim of the present invention to provide radio frequency apparatus which overcomes the abovementioned problems.

It is a further aim of the present invention to provide a method of using radio frequency apparatus which overcomes the abovementioned problems.

It is a yet further aim of the present invention to provide a tower mounted amplifier and/or a method of using a tower mounted amplifier which overcomes the abovementioned problems.

It is a yet further aim of the present invention to provide a cell site arrangement that overcomes the abovementioned problems.

It is a yet further aim of the present invention to provide a method of using a cell site arrangement that overcomes the abovementioned problems.

According to a first aspect of the present invention there is provided radio frequency apparatus according to claim 1.

Thus, the present invention provides radio frequency apparatus, such as for example in the form of a TMA, that combines the functionality of a device having amplification means with the functionality of a combiner in use. This has the advantage that it significantly cleans up the design of a cell site. It results in fewer units being provided on the cell site mast and/or at the cell site, it allows fewer interconnections, thereby making the problems associated with passive inter-modulation (PIM) less likely. In addition, a single unit is easier to fit and therefore simplifies the cell site design and time and cost associated with rigging of the mast.

Preferably the first transmit and receive frequency band is different to the at least second transmit and/or receive frequency band.

Preferably one of the transceiver device ports is associated with the first transmit and receive radio frequency band, and one of the transceiver device ports is associated with the second transmit and/or receive frequency band.

Preferably there is no overlap between the frequency band associated with each of the two or more transceiver device ports.

In one embodiment the first antenna port is connected directly or indirectly to an antenna in use. Thus, for example, the antenna port transmits one or more radio frequency transmission signals from the apparatus in use (i.e. it is an output port in a transmission direction)

In one embodiment the two transceiver device ports are connected directly or indirectly to a transceiver device in use. Thus, for example, a transceiver device port receives one or more radio frequency transmission signals from the apparatus (i.e. it is an input port in a transmission direction).

In one embodiment each of the transceiver device ports is associated with a single radio frequency range or band.

In one embodiment at least one, or each, of the transceiver device ports is associated with two or more radio frequency bands, such as for example two or more different radio frequency bands. Preferably there is no overlap between the two or more frequency bands associated with the transceiver device port or with each of the transceiver device ports and the frequency band or frequency bands associated other transceiver device ports.

Preferably the one or more transceiver devices that are connectable to the transceiver device ports in use are a base transceiver station (BTS) and/or a remote radio head (RRH).

Preferably the radio frequency apparatus is a dual radio frequency apparatus in that the circuitry contained within the same includes at least two copies of the same circuitry.

Preferably each of the first transmit and/or receive frequency band and the second transmit and/or receive frequency band includes a transmit frequency band and a receive frequency band.

In one embodiment the transmit/receive pathway and/or the at least one further transmit/receive pathway allows transmission and reception at the same frequency, frequency range and/or frequency band.

Preferably the first transmit and/or receive frequency band is different or substantially different to the at least second transmit and/or receive frequency band.

Preferably the first and/or at least second transmit and/or receive frequency band can include or cover two or more frequency bands therein that are contiguous or non-contiguous.

Preferably the frequency bands within the first and at least second transmit and/or receive frequency band do not overlap and are different. It is to be noted that the frequency bands within the first and at least second frequency transmit and/or receive bands could be inter-leaved.

Preferably the radio frequency apparatus is multiplexed apparatus in that it takes two input pathways of different frequency bands or transmit and/or receive ranges and multiplexes them to form a single output pathway.

Preferably one or more filters means are provided in the at least one transmit/receive pathway, one or more of the transmission pathways, and/or one or more of the receive pathways.

Preferably the one or more filters means allow one or more radio frequency signals to pass therethrough at the frequency band at which the pathway operates at, but which prevents, attenuates or substantially prevents or attenuates the passage of one or more radio frequency signals therethrough at frequencies outside of the frequency band at which the pathway operates at.

Preferably a receive filter means is provided upstream of the amplification means in the one or more receive pathways for allowing passage of one or more receive radio frequency signals therethrough in use. The upstream receive filter means is preferably operable at the same or substantially the same frequency band as the receive pathway is operable at.

Preferably a receive filter means is provided downstream of the amplification means in the one or more receive pathways for allowing passage of one or more receive radio frequency signals therethrough in use. The downstream receive filter means is preferably operable at the same or substantially the same frequency range or band as the receive pathway is operable at.

Preferably the or each receive pathway includes both an upstream receive filter means and a downstream receive filter means. The two receive filter means are preferably provided in series in the receive pathway.

Preferably the one or more filter means provided in the apparatus are bandpass filter means operable at the first frequency band and/or the at least second frequency band.

In one embodiment the circuitry of the apparatus further includes or consists of at least one further transmit/receive pathway and/or a third transmit pathway and a third receive pathway for transmitting and/or receiving one or more radio frequency signals at a third transmit and/or receive radio frequency band.

Preferably the first transmit and/or receive frequency band, the second transmit and/or receive frequency band and the third transmit and/or receive frequency band are different or substantially different to each other and do not overlap.

Preferably one of the transceiver device ports is also connected to the at least one further transmit/receive pathway and/or the third transmit pathway and the third receive pathway.

Preferably one of the transceiver device ports is connected to pathways within the apparatus that are connected to two different antenna ports.

Preferably the at least one further transmit/receive pathway and/or the third transmit pathway and the third receive pathway are connected or connectable to the same antenna port in use.

Preferably the antenna port with the at least one further transmit/receive pathway and/or the third transmit pathway and the third receive pathway is distinct to the first antenna port.

In one embodiment one of the transceiver device ports receives and/or transmits one or more radio frequency signals at two of the first, second or third transmit and/or receive frequency bands.

In one embodiment the first, second and/or third receive pathways include amplification means.

In one embodiment amplification means can be shared between two or more of the receive pathways.

Preferably the amplification means is any device which allows amplification or gain of an incoming radio frequency signal received at an antenna port. The amplification means could include one or a number of amplification stages within the same.

Preferably the amplification means is a low noise amplifier (LNA). A LNA is one which has a relatively small impact on the signal to noise ratio of the incoming signal.

In one embodiment bypass circuitry or a bypass path can be associated with the amplification means to allow the one or more receive radio frequency signals to bypass the amplification means in use, such as for example in the event of failure of the amplification means or failure of a power supply to the amplification means.

Preferably the amplification means and/or bypass circuitry or path is/are provided between first and second receive filter means in at least one of the receive pathways.

In one embodiment alarm and/or supervision means can be associated with the amplification means if required. The alarm means can be used to signal a fault associated with the amplification means to a suitable party.

Preferably a bias tee is provided in the radio frequency apparatus.

Preferably the bias tee directs a direct current (DC) power supply to the amplification means without substantially effecting transmit or receive signals.

Preferably the DC power supply is typically provided from a transceiver device, a BTS and/or RRH via one or more connecting co-axial cables.

Preferably a capacitor or capacitor means are associated with the bias tee. The capacitor or capacitor means acts as a DC power block to prevent or substantially prevent DC current from entering the transmit or receive pathways in use.

In one embodiment the radio frequency apparatus is provided in a housing or unit, such as for example a single unitary housing. The housing or unit is preferably formed of such material and design to be substantially weatherproof to withstand environmental conditions. The housing could be attached to, detachably attached to or integrally formed with an antenna with which the radio frequency apparatus is used.

In one embodiment the apparatus or housing thereof is provided or associated with mounting means or a mounting device for mounting is to a suitable support structure in use, such as for example to a mast, upright member, tower, suitable surface of a building and/or the like.

Preferably the mounting means could include any or any combination of one or more brackets, nuts and bolts, screws, jubilee clips and/or the like.

A filter and/or bandpass filter is typically any suitable filtering means which allows one or more radio frequency signals of the operating frequency or frequency band to pass through it but which attenuates, prevents, substantially attenuates or substantially prevents at least some other frequencies or frequency bands from passing through to a greater extent.

In one embodiment a wireless communication system in which the radio frequency apparatus is used includes two or more BTSs and/or RRHs, a mast and an antenna system. Preferably the antenna system supports transmission and/or reception of one or more radio frequency signals via two statistically independent paths.

In one embodiment the radio frequency apparatus includes a single antenna port.

In one embodiment the radio frequency apparatus includes first and at least second antenna ports.

Preferably the at least one antenna port is connectable directly or indirectly to at least one antenna in use.

Preferably the radio frequency apparatus is in the form of a tower mounted amplifier (TMA), a radio frequency router or a radio frequency device with amplification or active amplification.

Preferably a transmit/receive pathway referred to herein is a pathway capable of transmitting and receiving radio frequency signals along the same pathway.

According to a second aspect of the present invention there is provided a method of using radio frequency apparatus according to claim 15.

According to further embodiments of the present invention there is provided a tower mounted amplifier and/or a method of use thereof.

According to yet further embodiments of the present invention there is provided a cell site arrangement or wireless communication system; and a method of using a cell site arrangement or wireless communication system.

According to yet further embodiments of the present invention there is provided an antenna system including an antenna and a TMA; and a method of using the same.

Embodiments of the present invention will now be described with reference to the accompanying figures, wherein:
Figure 1 (Prior Art) is an example of a conventional cell site arrangement for a wireless communication network operating over a single radio frequency range;
Figure 2 (Prior Art) is a further example of a conventional cell site arrangement for a wireless communication network operating over two different radio frequency ranges;
Figure 3 (Prior Art) is a yet further example of a conventional cell site arrangement for a wireless communication network operating over two different radio frequency ranges;
Figure 4 is an example of a cell site arrangement for a wireless communication network according to an embodiment of the present invention;
Figure 5 is an example of circuitry provided in the TMA shown in Figure 4;
Figure 6 is an example of circuitry that could be provided in a TMA according to another embodiment of the present invention;
Figure 7 is an example of circuitry that could be provided in a TMA according to the prevent invention, similar to Figure 6 but where the amplifier is shared between two receive pathways according to an embodiment of the present invention; and
Figure 8 is an example of circuitry that could be provided in a TMA according to the present invention where there are three different frequency bands associated with the TMA.

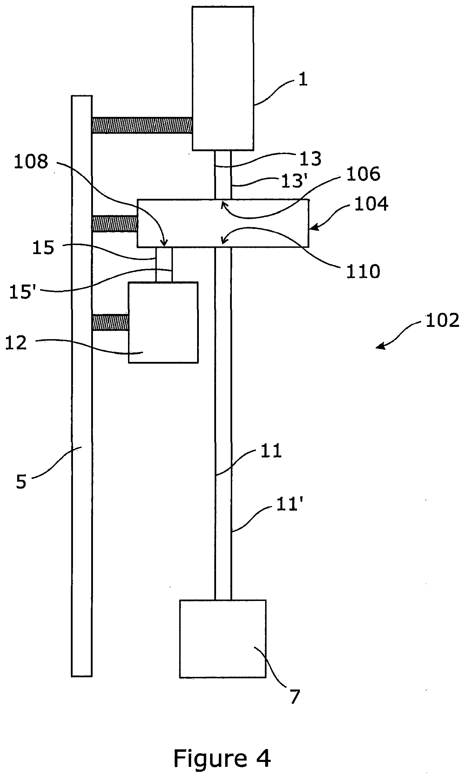

Referring firstly to figure 4, there is illustrated a cell site arrangement 102 incorporating radio frequency apparatus in the form of a TMA 104 according to the present invention. The same reference numerals are used to describe the same features as referred to previously in figures 1-3.

The cell site 102 includes a mast 5 with an antenna 1 located at the top of the mast. A TMA 104 is connected to the antenna 1 at the top of mast 5 via co-axial cables 13, 13', which connect to TMA 104 via TMA output port 106.

A remote radio head (RRH) 12 is located at the top of mast 5 and is connected to TMA 104 via co-axial cables 15, 15'. RRH 12 operates over radio frequency 'Band A'. Co-axial cables 15, 15' connect with TMA 104 via a first set of TMA input ports represented by input port 108.

A base transceiver station (BTS) 7 is located at the base of mast 5 and is connected to TMA 104 via co-axial cables 11, 11'. BTS 7 operates over radio frequency 'Band B'. Co-axial cables 11, 11' connect with TMA 104 via a second set of TMA input ports represented by input port 110.

In accordance with the present invention, radio frequency 'Band A' is different to radio frequency 'Band B' and there is no overlap between the two sets of frequency bands.

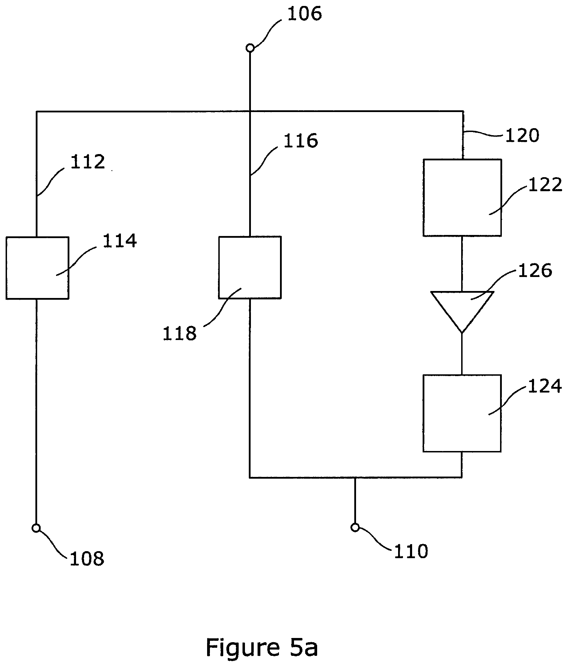

Referring to figure 5a, there is illustrated circuitry that could be located in TMA 104 in one embodiment. The circuitry includes a transmit/receive pathway 112 for receiving and/or transmitting one or more radio frequency signals in 'Band A'. A transmit/receive filter 114 is provided in transmit/receive pathway 112 which allows transmit and receive radio frequency signals at frequency 'Band A' to pass through the same but which prevents one or more radio frequency signals of a radio frequency different to 'Band A' from passing therethrough in use.

A transmit pathway 116 is provided in TMA 104 for transmitting one or more radio frequency signals at frequency 'Band B'. A transmit filter 118 is provided in the transmit pathway 116 which allows transmit radio frequency signals at radio frequency 'Band B' to pass through the same but which prevents one or more radio frequency signals at a radio frequency other than 'Band B' from passing therethrough in use.

A receive pathway 120 is provided in TMA 104 for receiving one or more radio frequency signals at frequency 'Band B'. Receive filters 122, 124 are provided in receive pathway 120 either side of an amplifier 126. Receive filters 122, 124 allow receive radio frequency signals at radio frequency 'Band B' to pass through the same but which prevent one or more radio frequency signals at a radio frequency other than 'Band B" from passing therethrough. Amplifier 126 amplifies the receive signals passing along receive pathway 120.

In accordance with the present invention, transmit/receive pathway for 'Band A' is connected between first TMA input port 108 and antenna output port 106. The receive and transmit pathways 120, 116 respectively are connected between second TMA input port 110 and antenna output port 106. The pathways 112, 116, 120 are multiplexed before or at antenna output port 106. Pathways 116, 120 are multiplexed together before or at second TMA input port 110.

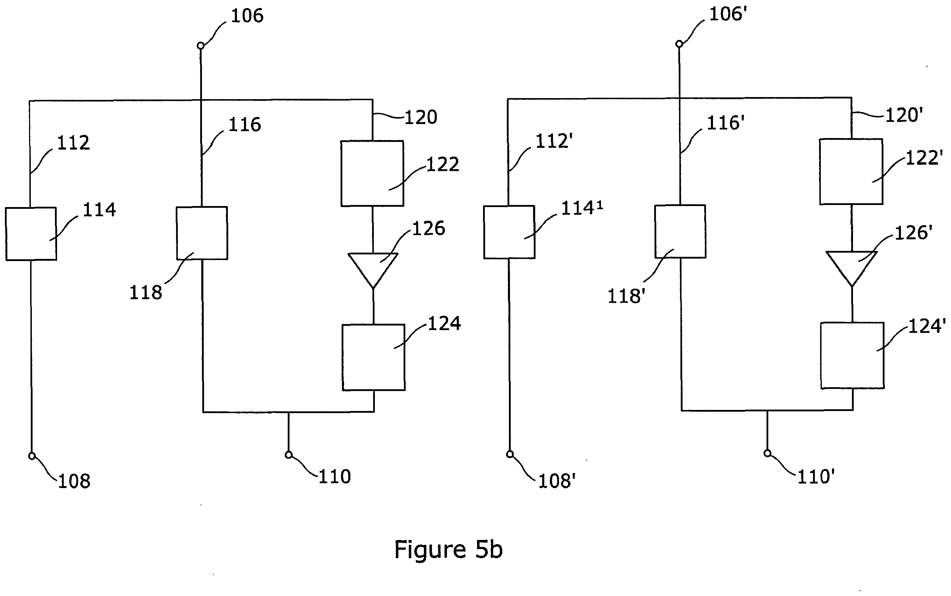

The TMA 104 can be a dual TMA in that it has two copies of the circuitry shown in figure 5a, as shown in figure 5b. The second copy of the circuitry is shown in figure 5b using the same reference numerals as in figure 5a but with "'.

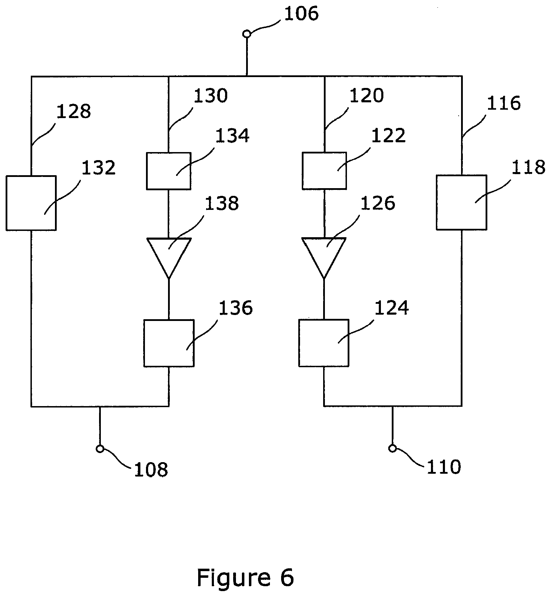

Alternative circuitry for the TMA 104 is shown in figure 6. Only one circuit is shown for the purposes of clarity but it will be understood that the TMA can be a dual TMA and have a mirror image of the circuitry included therein. In the illustration in figure 6, rather than having a single combined transmit/receive pathway 112 as shown in figure 5a, there is provided a transmit pathway 128, and a separate receive pathway 130. The first transmit pathway 128 has a transmit filter 132 contained therein for allowing transmission of radio frequency signals at 'Band A' to pass therethrough but to prevent radio frequency signals at a frequency other than 'Band A' from passing through. The receive pathway 130 has two receive filters 134, 136 provided either side of an amplifier 138. The transmit and receive pathways 128, 130 are multiplexed together at or just prior to TMA input port 108, and at or just prior to output port 106. The transmit and receive pathways 116, 120 for 'Band B' are as previously described.

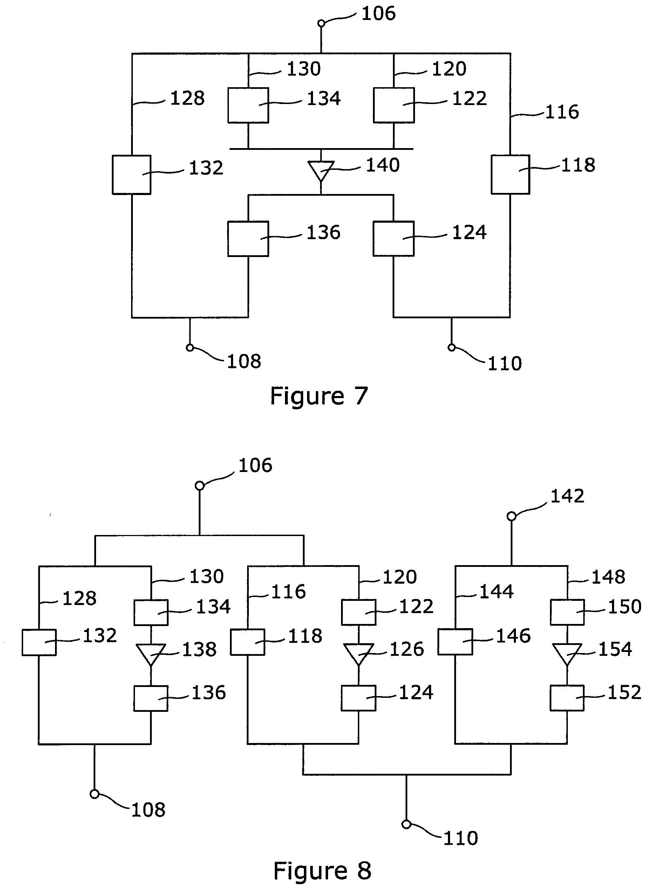

Figure 7 shows a further example of circuitry for a TMA according to the present invention. This circuitry is similar to the circuitry shown in figure 6 but in this example, a single amplifier 140 is shared between the two receive pathways 130, 120 for 'Band A' and 'Band B' rather than separate amplifiers 138, 126 being provided.

Figure 8 shows a yet further example of circuitry for a TMA according to the present invention which services more than two radio frequency bands. In this example, a transmit pathway 128 and a receive pathway 130 are provided for transmitting and receiving one or more radio frequency signals in 'Band A' respectively and are provided between first input port 108 and first output port 106. A transmit pathway 116 and a receive pathway 120 are provided for transmitting and receiving one or more radio frequency signals in 'Band B' respectively and are provided between second input port 110 and first output port 106. A transmit pathway 144 and a receive pathway 148 are provided for transmitting and receive one or more radio frequency signals in 'Band C' respectively and are provided between second input port 110 and a second output port 142.

Transmit pathway 144 has a transmit filter 146 for allowing one or more transmission radio frequency signals to pass therethrough having a frequency falling within 'Band C' but which prevents radio frequency signals from passing therethrough which are at a radio frequency other than 'Band C'. Receive pathway 148 has two receive filters 150, 152 located either side of an amplifier 154. The receive filters 150, 152 allow one or more receive radio frequency signals to pass therethrough having a frequency falling within 'Band C' but which prevents radio frequency signals from passing therethrough which are at a radio frequency other than 'Band C'.

Antenna output port 106 transmits and receives signals in 'Band A' and 'Band B', whereas antenna output port 142 transmits and receives signals in 'Band C'. Input port 108 transmits and receives signals in 'Band A', whereas input port 110 transmits and receives signals in 'Band B' and 'Band C'. It is likely that there is provided a BTS operating in 'Band B' and a BTS operating in 'Band C', the signals for which are passed through a combiner and then the combined signals are transmitted and/or received via input port 110. Thus, as per the present invention, the radio frequency range associated with input port 108 is different to and does not overlap with the radio frequency ranges associated with input port 110.

## Claims

1. Radio frequency apparatus, said apparatus including a first transmission pathway (116) for transmitting one or more radio frequency signals at a first transmit frequency band; a first receive pathway (120) for receiving one or more radio frequency signals at a first receive frequency band; and
a transmit/receive pathway (112) for transmitting and receiving one or more radio frequency signals at a second transmit and/or receive frequency band; or a second transmission pathway (128) for transmitting one or more radio frequency signals at a second transmit frequency band; and a second receive pathway (130) for receiving one or more radio frequency signals at a second receive frequency band;
said apparatus having a first antenna port (106) connectable directly or indirectly to an antenna (1) in use, said first antenna port connected to the first transmission pathway (116), the first receive pathway (120) and the transmit/receive pathway (112) and
the second
transmission pathway (128) and the second receive pathway (130);
**characterised in that**:
for said first antenna port (106) said apparatus has at least two transceiver device ports (108, 110) associated with the same, the at least two transceiver device ports (108, 110) connectable directly or indirectly to one or more transceiver devices (7) in use;
wherein one of the transceiver device
ports (110) is connected to the first transmission and receive pathways (116, 120), and
another one of the transceiver device ports (108) is connected to the transmit/receive pathway (112) and/or the second transmission pathway (128) and the second receive pathway (130);
and wherein amplification means (126, 138, 154) are provided in or associated with at least one of the receive pathways (120, 130) for amplifying the one or more received radio frequency signals received at the first antenna port (106).

2. Apparatus according to claim 1 wherein one or more filter means (114, 118, 122, 124, 134, 136, 150, 152, 132, 146) are provided in the transmit/receive pathway (112), one or more of the transmission pathways (116, 128) and/or one or more of the receive (120, 130) pathways.

3. Apparatus according to claim 1 wherein a receive filter means (122, 134, 150) is provided upstream of the amplification means (126, 138, 154) in one or more of the receive pathways (120, 130) and/or a receive filter means (124, 136, 152) is provided downstream of the amplification means (126, 138, 154) in one or more of the receive pathways (120, 130).

4. Apparatus according to claim 1 wherein circuitry provided in the apparatus further includes a further transmit/receive pathway and/or a third transmit pathway (144) and a third receive pathway (148) for transmitting and/or receiving one or more radio frequency signals at a third transmit and/or receive frequency band.

5. Apparatus according to claim 4 wherein one of the transceiver device ports (108, 110) is also connected to the further transmit/receive pathway and/or the third transmit pathway (144) and the third receive pathway (148).

6. Apparatus according to claim 4 wherein one of the transceiver device ports (108, 110) is connected to pathways connected to two different antenna ports (106, 142).

7. Apparatus according to claims 4 or 6 wherein the further transmit/receive pathway and/or the third transmit pathway (144) and the third receive pathway (148) are connected to the same antenna port (142).

8. Apparatus according to claim 4 wherein the first, second and third transmit and/or receive frequency bands are different to each other and do not overlap.

9. Apparatus according to claim 4 wherein one of the transceiver device ports (108, 110) receives and/or transmits one or more radio frequency signals at two of the first, second or third transmit and/or receive frequency bands.

10. Apparatus according to claim 1 or 4 wherein the amplification means (126, 138, 154) are provided in the first, second and/or third receive pathways (120, 130, 148), or wherein amplification means (126, 138, 154) are shared between two or more of the receive pathways (120, 130, 148).

11. Apparatus according to claim 1 wherein bypass circuitry or a bypass path can be associated with the amplification means to allow one or more radio frequency signals to bypass the amplification means in use, and wherein the amplification means and/or the bypass circuitry or path is/are provided between first and second
receive filter means in at least one of the receive pathways (120, 130, 148).

12. Apparatus according to claim 1 wherein alarm and/or supervision means are associated with the amplification means (126, 138, 154).

13. Apparatus according to claim 1 wherein a bias tee is provided, and a capacitor or capacitor means are associated with the bias tee.

14. Apparatus according to claim 1 wherein a single antenna port (106) is provided, or wherein first and at least second antenna ports (106, 142) are provided.

15. A method of using radio frequency apparatus, said method including the steps of:
connecting at least a first antenna port (106) directly or indirectly to an antenna (1) in use;
connecting at least two transceiver device ports (108, 110) directly or indirectly to one or more transceiver devices (7);
transmitting one or more radio frequency signals at a first transmit frequency band along a first transmission pathway (116) ;
receiving one or more radio frequency signals at a first receive frequency band along a first receive pathway (120); and
transmitting and receiving one or more radio frequency signals at a second transmit and/or receive frequency band along a transmit/receive pathway (112); or
transmitting one or more radio frequency signals at a second transmit frequency band along a second transmission pathway (128); and receiving one or more radio frequency signals at a second receive frequency band along a second receive pathway (130);
and wherein said first antenna port (106) is connected to the first transmission pathway (116), the first receive pathway (120) and the transmit/receive pathway (112) and the second transmission pathway (128) and the second receive pathway (130); **characterised in that** the first antenna port (106) is associated with the at least two transceiver device ports (108, 110); wherein one of the transceiver device ports (110) connected to the first transmission and
receive pathways (116, 120), and another one of the transceiver device ports (108) is connected to the transmit/receive pathway (112) and/or the second transmission pathway and the second receive pathway (128, 130);
and said method further includes the step of amplifying one or more of the received radio frequency signals received at the first antenna port using amplification means (126, 138, 154) provided in or associated with at least one of the receive pathways (120, 130).

## Patentansprüche

1. Funkfrequenzvorrichtung, wobei die Vorrichtung Folgendes umfasst: eine erste Sendestrecke (116) zum Senden von einem oder mehreren Funkfrequenzsignalen in einem ersten Sendefrequenzband; eine erste Empfangsstrecke (120) zum Empfangen von einem oder mehreren Funkfrequenzsignalen in einem ersten Empfangsfrequenzband; und
eine Sende-/Empfangsstrecke (112) zum Senden und Empfangen von einem oder mehreren Funkfrequenzsignalen in einem zweiten Sende- und/oder Empfangsfrequenzband; oder
eine zweite Sendestrecke (128) zum Senden von einem oder mehreren Funkfrequenzsignalen in einem zweiten Sendefrequenzband; und eine zweite Empfangsstrecke (130) zum Empfangen von einem oder mehreren Funkfrequenzsignalen in einem zweiten Empfangsfrequenzband;
wobei die Vorrichtung einen ersten Antennenanschluss (106) aufweist, der mit einer Antenne (1) im Einsatz direkt oder indirekt verbunden werden kann, wobei der erste Antennenanschluss mit der ersten Sendestrecke (116), der ersten Empfangsstrecke (120) und der Sende-/Empfangsstrecke (112) und der zweiten Sendestrecke (128) und der zweitem Empfangsstrecke (130) verbunden ist;
**dadurch gekennzeichnet, dass**:
die Vorrichtung für den ersten Antennenanschluss (106) mindestens zwei damit assoziierte Sende-/Empfangsgerätanschlüsse (108, 110) aufweist, wobei die mindestens zwei Sende-/Empfangsgerätanschlüsse (108, 110) mit einem oder mehreren Sende-/Empfangsgeräten (7) im Einsatz direkt oder indirekt verbunden werden können;
wobei einer der Sende-/Empfangsgerätanschlüsse (110) mit der ersten Sende- und der ersten Empfangsstrecke (116, 120) verbunden ist und ein anderer der Sende-/Empfangsgerätanschlüsse (108) mit der Sende-/Empfangsstrecke (112) und oder der zweiten Sendestrecke (128) und der zweiten Empfangsstrecke (130) verbunden ist;
und wobei Verstärkungsmittel (126, 138, 154) zum Verstärken des einen oder der mehreren an dem ersten Antennenanschluss (106) empfangenen Funkfrequenzsignale in mindestens einer der Empfangsstrecken (120, 130) bereitgestellt sind oder damit assoziiert sind.

2. Vorrichtung nach Anspruch 1, wobei ein oder mehrere Filtermittel (114, 118, 122, 124, 134, 136, 150, 152, 132, 146) in der Sende-/Empfangsstrecke (112), einer oder mehreren der Sendestrecken (116, 128) und/oder einer oder mehreren der Empfangsstrecken (120, 130) bereitgestellt sind.

3. Vorrichtung nach Anspruch 1, wobei ein Empfangsfiltermittel (122, 134, 150) den Verstärkungsmitteln (126, 138, 154) vorgeschaltet in einer oder mehrerer der Empfangsstrecken (120, 130) bereitgestellt ist und/oder ein Empfangsfiltermittel (124, 136, 152) den Verstärkungsmitteln (126, 138, 154) nachgeschaltet in einer oder mehreren der Empfangsstrecken (120, 130) bereitgestellt ist.

4. Vorrichtung nach Anspruch 1, wobei eine in der Vorrichtung bereitgestellte Schaltung ferner eine weitere Sende-/Empfangstrecke und oder eine dritte Sendestrecke (144) und eine dritte Empfangsstrecke (148) zum Senden und/oder Empfangen von einem oder mehreren Funkfrequenzsignalen in einem dritten Sende- und/oder Empfangsfrequenzband umfasst.

5. Vorrichtung nach Anspruch 4, wobei einer der Sende-/Empfangsgerätanschlüsse (108, 110) außerdem mit der weiteren Sende-/Empfangsstrecke und/oder der dritten Sendestrecke (144) und der dritten Empfangsstrecke (148) verbunden ist.

6. Vorrichtung nach Anspruch 4, wobei einer der Sende-/Empfangsgerätanschlüsse (108, 110) mit Strecken verbunden ist, die mit zwei verschiedenen Antennenanschlüssen (106, 142) verbunden sind.

7. Vorrichtung nach Anspruch 4 oder 6, wobei die weitere Sende-/Empfangsstrecke und/oder die dritte Sendestrecke (144) und die dritte Empfangstrecke (148) mit demselben Antennenanschluss (142) verbunden sind.

8. Vorrichtung nach Anspruch 4, wobei das erste, das zweite und das dritte Sende- und/oder Empfangsfrequenzband voneinander verschieden sind und einander nicht überlappen.

9. Vorrichtung nach Anspruch 4, wobei einer der Sende-/Empfangsgerätanschlüsse (108, 110) ein oder mehrere Funkfrequenzsignale in zweien von dem ersten, dem zweiten und dem dritten Sende- und/oder Empfangsfrequenzband empfängt und/oder sendet.

10. Vorrichtung nach Anspruch 1 oder 4, wobei die Verstärkungsmittel (126, 138, 154) in der ersten, der zweiten und/oder der dritten Empfangstrecke (120, 130, 148) bereitgestellt sind oder wobei Verstärkungsmittel (126, 138, 154) von zwei oder mehr der Empfangsstrecken (120, 130, 148) gemeinsam genutzt werden.

11. Vorrichtung nach Anspruch 1, wobei eine Bypass-Schaltung oder eine Bypass-Strecke mit den Verstärkungsmitteln assoziiert werden kann, um zu ermöglichen, dass ein oder mehrere Funkfrequenzsignale die Verstärkungsmittel im Einsatz umgehen, und wobei die Verstärkungsmittel und/oder die Bypass-Schaltung oder die Bypass-Strecke zwischen ersten und zweiten Filtermitteln in mindestens einer der Empfangsstrecken (120, 130, 148) bereitgestellt ist bzw. sind.

12. Vorrichtung nach Anspruch 1, wobei Alarm- und/oder Überwachungsmittel mit den Verstärkungsmitteln (126, 138, 154) assoziiert sind.

13. Vorrichtung nach Anspruch 1, wobei ein Bias-Tee bereitgestellt ist und ein Kondensator oder Kondensatormittel mit dem Bias-Tee assoziiert sind.

14. Vorrichtung nach Anspruch 1, wobei ein einziger Antennenanschluss (106) bereitgestellt ist oder wobei ein erster und mindestens ein zweiter Antennenanschluss (106, 142) bereitgestellt sind.

15. Verfahren zum Verwenden einer Funkfrequenzvorrichtung, wobei das Verfahren folgende Schritte umfasst:
Verbinden mindestens eines ersten Antennenanschlusses (106) direkt oder indirekt mit einer Antenne (1) im Einsatz;
Verbinden von mindestens zwei Sende-/Empfangsgerätanschlüssen (108, 110) direkt oder indirekt mit einem oder mehreren Sende-/Empfangsgeräten (7);
Senden von einem oder mehreren Funkfrequenzsignalen in einem ersten Sendefrequenzband entlang einer ersten Sendestrecke (116);
Empfangen von einem oder mehreren Funkfrequenzsignalen in einem ersten Sendefrequenzband entlang einer ersten Empfangsstrecke (120); und
Senden und Empfangen von einem oder mehreren Funkfrequenzsignalen in einem zweiten Sende- und/oder Empfangsfrequenzband entlang einer Sende-/Empfangsstrecke (112); oder
Senden von einem oder mehreren Funkfrequenzsignalen in einem zweiten Sendefrequenzband entlang einer zweiten Sendestrecke (128); und Empfangen von einem oder mehreren Funkfrequenzsignalen in einem zweiten Empfangsfrequenzband entlang einer zweiten Empfangsstrecke (130);
und wobei der erste Antennenanschluss (106) mit der ersten Sendestrecke (116), der ersten Empfangsstrecke (120) und der Sende-/Empfangsstrecke (112) und der zweiten Sendestrecke (128) und der zweiten Empfangsstrecke (130) verbunden ist; **dadurch gekennzeichnet, dass** der erste Antennenanschluss (106) mit den mindestens zwei Sende-/Empfangsgerätanschlüssen (108, 110) assoziiert ist; wobei einer von den Sende-/Empfangsgerätanschlüssen (110) mit der ersten Sende- und der ersten Empfangsstrecke (116, 120) verbunden ist und ein anderer der Sende-/Empfangsgerätanschlüsse (108) mit der Sende-/Empfangstrecke (112) und/oder der zweiten Sendestrecke und der zweiten Empfangsstrecke (128, 130) verbunden ist; und
wobei das Verfahren ferner den Schritt des Verstärkens von einem oder mehreren der empfangenen Funkfrequenzsignale, die an dem ersten Antennenanschluss empfangen werden, unter Verwendung von in mindestens einer der Empfangsstrecken (120, 130) bereitgestellten oder damit assoziierten Verstärkungsmitteln (126, 138, 154) umfasst.

## Revendications

1. Un appareil à radiofréquences, ledit appareil ayant une première voie de transmission (116) visant à transmettre un ou plusieurs signaux RF à une première bande de fréquences de transmission ; une première voie de réception (120) visant à recevoir un ou plusieurs signaux RF à une première bande de fréquences de réception ;
et une voie de transmission/réception (112) visant à transmettre et recevoir un ou plusieurs signaux RF à une deuxième bande de fréquences de transmission et/ou de réception ; ou une deuxième voie de transmission (128) visant à transmettre un ou plusieurs signaux RF à une deuxième bande de fréquences de transmission ; et une deuxième voie de réception (130) visant à recevoir un ou plusieurs signaux RF à une deuxième bande de fréquences de réception ;
ledit appareil ayant un premier port d'antenne (106) pouvant être connecté directement ou indirectement à une antenne (1) en utilisation, ledit premier port d'antenne étant connecté à la première voie de transmission (116), à la première voie de réception (120) et à la voie de transmission/réception (112) et à la deuxième voie de transmission (128) et à la deuxième voie de réception (130) ;
**Caractérisé en ce que** :
pour ledit premier port d'antenne (106), ledit appareil a au moins deux ports de dispositif émetteur-récepteur (108, 110) associés à celui-ci, le ou les ports de dispositif émetteur-récepteur (108, 110) pouvant être connectés directement ou indirectement à un ou plusieurs dispositifs émetteurs-récepteurs (7) en utilisation ;
dans lequel un des ports du dispositif émetteur-récepteur (110) est connecté aux premières voies de transmission et de réception (116, 120) et un des ports du dispositif émetteur-récepteur (108) est connecté à la voie de transmission/réception (112) et/ou à la deuxième voie de transmission (128) et la deuxième voie de réception (130) ;
et dans lequel des moyens d'amplification (126, 138, 154) sont fournis dans (ou associés à) au moins une des voies de réception (120, 130) afin d'amplifier un ou plusieurs signaux RF reçus au premier port d'antenne (106).

2. Appareil selon la revendication 1, dans lequel un ou plusieurs moyens de filtrage (114, 118, 122, 124, 134, 136, 150, 152, 132, 146) sont fournis dans la voie de transmission/réception (112), une ou plusieurs voies de transmission (116, 128) et/ou une ou plusieurs voies de réception (120, 130).

3. Appareil selon la revendication 1, dans lequel un moyen de filtrage de réception (122, 134, 150) est fourni en amont du moyen d'amplification (126, 138, 154) dans une ou plusieurs voies de réception (120, 130) et/ou un moyen de filtrage de réception (124, 136, 152) est fourni en aval du moyen d'amplification (126, 138, 154) dans une ou plusieurs des voies de réception (120, 130).

4. Appareil selon la revendication 1, dans lequel les circuits fournis dans l'appareil comprennent en outre une autre voie de transmission/réception et/ou une troisième voie de transmission (144) et une troisième voie de réception (148) visant à la transmission et/ou à la réception d'un ou plusieurs signaux RF à une troisième bande de fréquences de transmission/réception.

5. Appareil selon la revendication 4, dans lequel l'un des ports du dispositif émetteur-récepteur (108, 110) est également connecté à l'autre voie de transmission/réception et/ou à la troisième voie de transmission (144) et la troisième voie de réception (148).

6. Appareil selon la revendication 4, dans lequel un des ports du dispositif émetteur-récepteur (108, 110) est connecté à des voies connectées à deux différents ports d'antenne (106, 142).

7. Appareil selon la revendication 4 ou 6, dans lequel l'autre voie de transmission/réception et/ou la troisième voie de transmission (144) et la troisième voie de réception (148) sont connectées au même port d'antenne (142).

8. Appareil selon la revendication 4, dans lequel la première, deuxième et troisième bande de fréquences de transmission et/ou réception sont différentes les unes des autres et ne se chevauchent pas.

9. Appareil selon la revendication 4, dans lequel l'un des ports du dispositif émetteur-récepteur (108, 110) reçoit et/ou transmet un ou plusieurs signaux RF à deux bandes parmi la première, deuxième ou troisième bande de fréquences de transmission et/ou réception.

10. Appareil selon la revendication 1 ou 4, dans lequel des moyens d'amplification (126, 138, 154) sont fournis dans la première, deuxième et/ou troisième voie (120, 130, 148), ou dans lequel les moyens d'amplification (126, 138, 154) sont partagés entre deux voies de réception ou plus (120, 130, 148).

11. Appareil selon la revendication 1, dans lequel des circuits de dérivation ou un chemin de dérivation peuvent être associés au moyen d'amplification pour permettre à un ou plusieurs des signaux RF de contourner les moyens d'amplification utilisés, et dans lequel les moyens d'amplification et/ou le circuit ou chemin de dérivation sont fournis entre le premier et le deuxième moyen de filtrage de réception dans au moins l'une des voies de réception (120, 130, 148).

12. Appareil selon la revendication 1, dans lequel des moyens de surveillance et/ou d'alerte sont associés aux moyens d'amplification (126, 138, 154).

13. Appareil selon la revendication 1, dans lequel un té de polarisation est fourni, et un condensateur ou des moyens de condensation sont associés au té de polarisation.

14. Appareil selon la revendication 1, dans lequel un seul port d'antenne (106) est fourni, ou dans lequel le premier et au moins le deuxième port d'antenne (106, 142) sont fournis.

15. Une méthode visant à utiliser un appareil RF, ladite méthode comprenant les étapes suivantes :
Connexion d'au moins un premier port d'antenne (106) directement ou indirectement à une antenne (1) en utilisation ;
Connexion d'au moins deux ports de dispositifs émetteurs-récepteurs (108, 110), directement ou indirectement, à un ou plusieurs dispositifs émetteurs-récepteurs (7) ;
Transmission d'un ou plusieurs signaux RF à une première bande de fréquences de transmission le long d'une première voie de transmission recevant un ou plusieurs signaux RF à la première bande de fréquences de réception le long d'une première voie de réception (120) ; et
Transmission et réception d'un ou plusieurs signaux RF à une deuxième bande de fréquences de transmission et/ou réception le long d'une voie de transmission/réception (112) ; ou
Transmission d'un ou plusieurs signaux RF à une deuxième bande de fréquences de transmission le long d'une deuxième voie de transmission (128) ; et réception d'un ou plusieurs signaux RF à une deuxième bande de fréquences de réception le long d'une deuxième voie de réception (130) ;
et dans lequel ledit premier port d'antenne (106) est connecté à la première voie de transmission (116), la première voie de réception (120) et la voie de transmission/réception (112) et la deuxième voie de transmission (128) et la deuxième voie de réception (130) ; **caractérisé en ce que** le premier port d'antenne (106) est associé avec au moins deux des ports du dispositif émetteur-récepteur (108, 110) ; dans laquelle un des ports du dispositif émetteur-récepteur (110) connecté à la première voie de transmission et la première voie de réception (116, 120), et un autre des ports du dispositif émetteur-récepteur (108) est connecté à la voie de transmission/réception (112) et/ou à la deuxième voie de transmission et à la deuxième voie de réception (128, 130) ; et ladite méthode inclut en outre l'étape consistant à amplifier un ou plusieurs des signaux RF reçus au premier port de l'antenne à l'aide des moyens d'amplification (126, 138, 154) fournis dans (ou associés à) au moins une des voies de réception (120, 130).
